(19) Europäisches Patentamt
European Patent Office
Office européen des brevets

(11) EP 3 509 029 A1

(12) EUROPEAN PATENT APPLICATION
published in accordance with Art. 153(4) EPC

(43) Date of publication:
10.07.2019 Bulletin 2019/28

(51) Int Cl.:
G06Q 30/06 (2012.01)

(21) Application number: 17846621.5

(22) Date of filing: 30.08.2017

(86) International application number:
PCT/JP2017/031279

(87) International publication number:
WO 2018/043617 (08.03.2018 Gazette 2018/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.08.2016 JP 2016168660
20.06.2017 JP 2017120917

(71) Applicants:
• Hibiki Co., Ltd.
Kawagoe-shi, Saitama 350-1109 (JP)

• Hibiki, Yoshiharu
Kawagoe-shi, Saitama 350-1109 (JP)

(72) Inventor: HIBIKI, Yoshiharu
Kawagoe-shi
Saitama 350-1109 (JP)

(74) Representative: Weickmann & Weickmann
PartmbB
Postfach 860 820
81635 München (DE)

(54) ORDER ASSISTANCE SYSTEM

(57) Provided is an order assistance system with which even an inexperienced person can readily determine an order quantity while taking a long-term view. This order assistance system 1 is configured from a server computer 2 installed in a manufacturing factory, a client computer 3 installed in a store, and a network 4 connecting the server computer 2 and the client computer 3. The server computer 2 stores a code master file 21 and a sales result data file 22. The client computer 3 stores an item data file 31 and an order contact table file 32, and a variable data file 33 is temporarily stored in an internal storage device 3D.

FIG. 4

**Description**

**Technical Field**

The present invention relates to an order assistance system which is suitable when a store orders skewered materials of skewer-grilled products, such as grilled chicken and roast giblets, to a manufacturing factory.

Background Art

As for the skewer-grilled products such as grilled chicken and roast giblets, constituent materials such as chicken meat, pork, and green onion are processed and treated, the processed materials are appropriately combined, and the combinedmaterials are skewered to produce skewered materials such as chicken and green onions, skin, liver, and chicken wings in a manufacturing factory. These skewered materials are stored in a storage warehouse next to the manufacturing factory, and are kept refrigerated or frozen until shipment.

Stores such as retail stores, Japanese-style bars, and restaurants determine quantities of each item of a skewered material taking into consideration natural characteristics such as a season and weather, a day of the week characteristics such as a day of the week and a holiday, preference characteristics such as an area and a customer, and place an order to a manufacturing factory. In stores, skewered materials are roasted using a charcoal fire stove, a chicken grill or the like in accordance with a customer's order and are sold and provided as the skewer-grilled products.

Conventionally, a person in charge of a store takes into consideration the natural characteristics such as a season and weather, the day of the week characteristics such as a day of the week and a holiday, the preference characteristics such as an area and a customer, and takes into consideration the past sales result, but in actuality, places an order for the quantities of each item of the skewered material by intuition based on his experience.

However, according to the manner in which the person in charge of the store places an order by intuition based on his experience, there is a high possibility that an appropriate quantity cannot be necessarily ordered and products are sold out early, but on the contrary, a large quantity of products will remain unsold.

Therefore, in order to solve suchproblems, an order system for calculating an order quantity of products taking into consideration the natural characteristics such as a season and weather, the day of the week characteristics such as a day of the week and a holiday, and the like has been proposed (see Patent Literatures 1 to 3).

**Citation List**

**Patent Literature**

Patent Literature 1: JP 2003-67611 A
Patent Literature 2: JP 2002-24350 A
Patent Literature 3: JP 2001-167168 A

**Summary of Invention**

**Technical Problem**

However, any of the conventional order systems can calculate the order quantity of products taking into consideration the natural characteristics such as a season and weather, the day of the week characteristics such as a day of the week and a holiday, and the like, but does not place an order in a long-term view and does not order the quantities of each item of a skewered material in consideration of inventory at a store.

Also, the conventional order system calculates the order quantity of products taking into consideration the natural characteristics such as a season and weather, the day of the week characteristics such as a day of the week and a holiday, and the like, but should depend on the experienced person who understands the situation of the store better for the final determination of the order quantity and cannot be appropriately used by an inexperienced person who has worked at a store for a little while.

The present invention has been made in view of such problems, and it is an object of the present invention to provide an order assistance system capable of determining an order quantity in a long-term view taking into consideration inventory at a store and readily determining the order quantity even by an inexperienced person who has worked at a store for a little while.

## Solution to Problem

In order to achieve the above object, an order assistance system of the present invention is configured to include a server computer installed in a manufacturing factory, a client computer installed in a store, and a network connecting between the server computer and the client computer,
in which the server computer stores a sales result data file in which sales detail data for each item of a skewered material for the same month of the previous year and the last two months are stored and a code master file in which items of a skewered material, identification codes related to stores and the like, a name, fixed items such as a unit price, and a calendar are stored, and
the client computer stores in an external storage device an item data file in which the items of the skewered material to be handled at the corresponding store and an appropriately set inventory quantity are stored and an order contact table file which can describe order quantities of each item of the skewered material in a tabular format, and temporarily stores in an internal storage device a variable data file constituted by daily varying data like weather, a sales amount, predicted values and definitive values of inventory quantities and order quantities for the day of each item of the skewered material, and the like.

In the client computer, an order calculation sheet is displayed on a display screen, and the sales results of the skewer-grilled product over several days from the same day of the previous year are displayed in a sales result column for each day of the week and each weather condition.

In the client computer, by inputting the predicted sales amount of the skewer-grilled product and the weather forecast in a sales prediction column, and inputting inventory quantities for the day and warehoused quantities for the next day of each item of the skewered material in an order calculation column, automatic calculation is executed based on a standard holding quantity and the above-mentioned data, and an order quantity for the day after next is displayed in the order calculation column.

In the order calculation column, when the estimated inventory quantity exceeds the standard holding quantity, a warning display may be made in yellow or red depending on the extent of the excess quantity in the item of the skewered material.

Also, the order assistance system of the present invention can be applied to perishable foods or daily foods in place of the skewered material or together with the skewered material.

Also, the order assistance system of the present invention can be applied to beverages in place of the skewered material or together with the skewered material.

## Advantageous Effects of Invention

According to the order assistance system of the present invention, it is possible to determine the order quantity in a long-term view taking into consideration the inventory at the store and readily determine the order quantity even by the inexperienced person who has worked at a store for a little while.

## Brief Description of Drawings

FIG. 1 is a configuration view of an order assistance system of the present invention.
FIG. 2 is an explanatory view showing an example of a client computer and its peripheral devices installed in a store.
FIG. 3 is a configuration view of the client computer and its peripheral devices installed in a store.
FIG. 4 is a conceptual view showing a procedure in which an order is executed by a store in the order assistance system of the present invention.
FIG. 5 is an explanatory view showing an example of an order calculation sheet displayed on a display of the client computer in the order assistance system of the present invention.
FIG. 6 is an explanatory view showing an example of an order calculation sheet displayed on a display of the client computer in the order assistance system of the present invention.
FIG. 7 is an explanatory view showing an example of an order calculation sheet displayed on a display of the client computer in the order assistance system of the present invention .
FIG. 8 is an explanatory view showing an example of an order calculation sheet displayed on a display of the client computer in the order assistance system of the present invention.
FIG. 9 is an explanatory view showing an example of an order calculation sheet displayed on a display of the client computer in the order assistance system of the present invention.
FIG. 10 is an explanatory view showing an example of an order contact document prepared by the order assistance system of the present invention.

FIG. 11 is an explanatory view showing an example of an order calculation sheet displayed on a display of the client computer in the order assistance system of the present invention.

FIG. 12 is an explanatory view showing an example of an order contact document prepared by the order assistance system of the present invention.

**Description of Embodiments**

Preferred embodiments of an order assistance system of the present invention will be described in detail below with reference to the drawings.

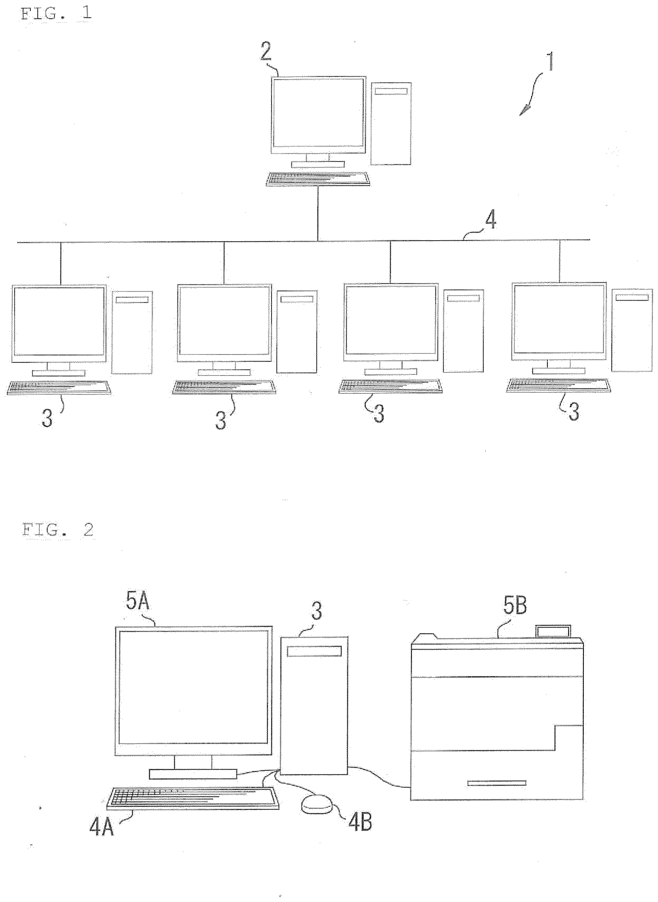

As shown in FIG. 1, an order assistance system 1 of the present invention is configured to include a server computer 2 installed in a manufacturing factory, client computers 3, 3, 3, 3, ... installed in a store, and a network 4 connecting between the server computer 2 and the client computers 3, 3, 3, 3, ....

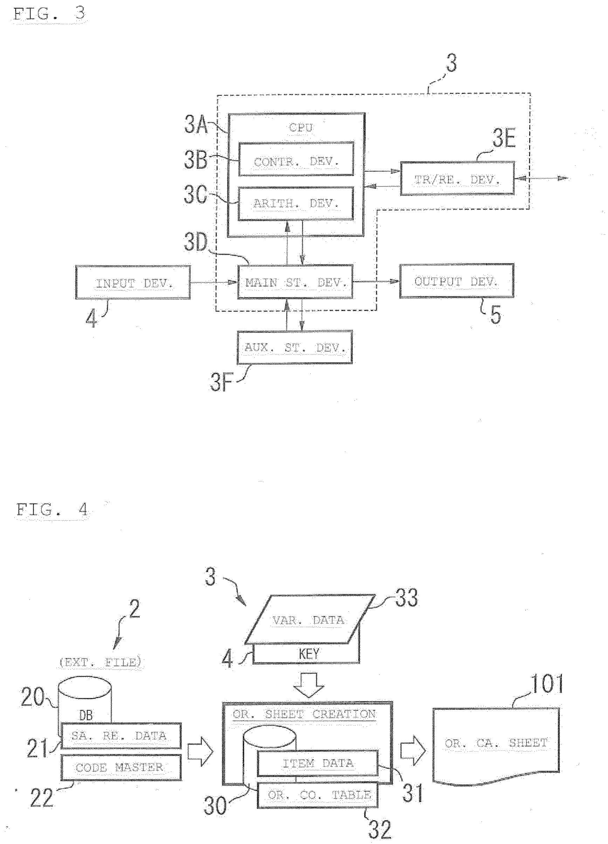

The server computer 2 is installed in the manufacturing factory, and as shown in FIG. 4, a database 20 is constructed in an external storage device (auxiliary storage device) 2A such as a hard disk.

A code master file 21 and a sales result data file 22 are stored in the database 20.

The code master file 21 stores items of a skewered material, identification codes related to stores and the like, a name, fixed item data such as a unit price, and a calendar data.

The sales result data file 22 stores sales detail data for each item of the skewered material for the same month of the previous year and the last two months.

The client computer 3 is installed in a store, and as shown in FIGS 2 and 3, a central processing unit (CPU) 3A, an internal storage device (main storage device) 3D such as a memory, and a transmitting/receiving device 3E are disposed inside a computer main body and an external storage device (auxiliary storage device) 3F such as a hard disk is disposed outside the computer main body.

Further, as peripheral devices, as shown in FIGS 2 and 3, an input device 4 such as a keyboard 4A and a mouse 4B and an output device 5 such as a display 5A and a printer 5B are connected to the client computer 3.

A database 30 is constructed in the external storage device (auxiliary storage device) 3F, and an item data file 31 and an order contact table file 32 are stored in the database 30.

In addition, a variable data file 33 is input to the internal storage device (main storage device) 3E at an appropriate timing and is temporarily stored therein.

The item data file 31 stores the items of the skewered material handled at the corresponding store, the appropriately set inventory quantity, and the like.

The order contact table file 32 is a file which can describe order quantities and the like for each item of the skewered material in a tabular format and is transmitted to the manufacturing factory.

The variable data file 33 is daily varying data like weather, a sales amount, predicted values of the inventory quantities for the day of each item of the skewered material, a definitive value and the like of an order quantity and the like, and a file which is input from an input device 4 such as a keyboard 4A and a mouse 4B and is temporarily stored in the internal storage device 3E.

The order assistance system 1 of the present invention is configured as described above and can be manipulated and operated as follows.

In the present embodiment, a description will be given a case in which a person in charge of a store adds up sales of a store and then executes an order operation on Friday, September 10, 2010.

First, as shown in FIGS 2 and 3, the person in charge of the store turns on a power supply of the client computer 3 installed in the store, and then sets up the order contact table file 32.

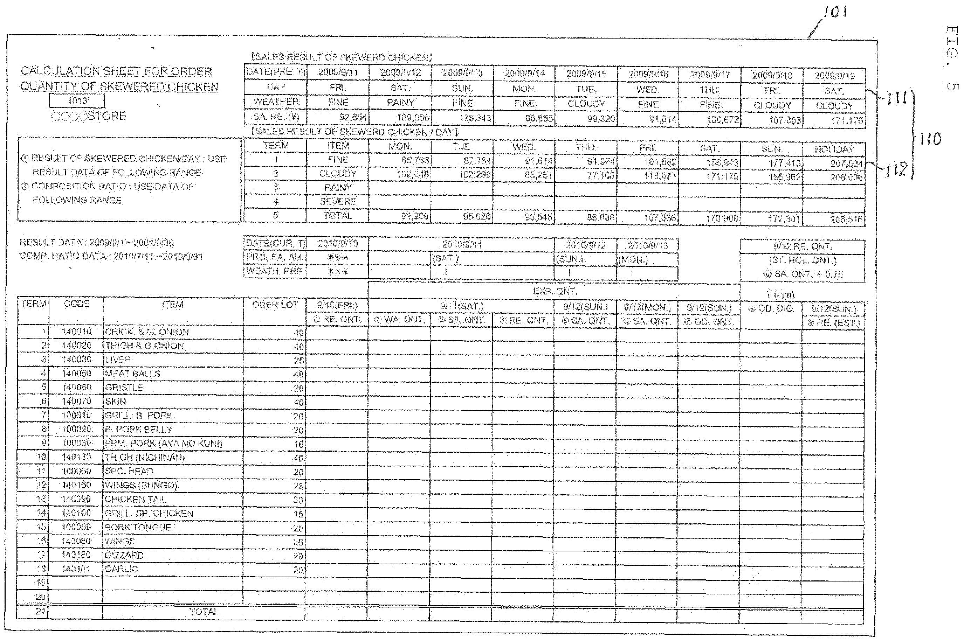

Thereby, as shown in FIG. 5, an order calculation sheet 101 is displayed on a screen of the display 5A of the client computer 3.

Here, data are transmitted from the code master file 21 and the sales result data file 22 which are stored in the database 20 of the server computer 2 to the transmitting/receiving device 3E of the client computer 3 in accordance with a command from the central processing unit (CPU) 3A, and stored in the internal storage device 3D and the external storage device 3F.

As a result, as shown in FIG. 5, together with a day of the week and weather, the sales results of the skewer-grilled products over 9 days from the next day of the corresponding day of the previous year are displayed in the same month and day of the previous year result column 111 in a sales result column 110 of the order calculation sheet 101.

Further, as shown in FIG. 5, the sales results of the skewer-grilled products for each day of the week and each weather condition over three months before and after the corresponding day of the previous year are displayed in a result column for each day of the week and each weather condition 112.

An average value for each day of the week for the sales results over three months before and after the corresponding day of the previous year is displayed in a total column of the result column for each day of the week and each weather condition 112.

As numerals corresponding to the weather, 1 allocates fine weather, 2 allocates cloudy weather, 3 allocates rainy weather and 4 allocates severe weather.

Further, the central processing unit (CPU) 3A of the client computer 3 calculates sales composition ratios A for each item of the skewer-grilled product based on the sales result data of the skewer-grilled product over the three months before and after the corresponding day of the previous year, and temporarily stores the calculated sales composition ratio A in the internal storage device 3D.

Here, the sales composition ratio A for a predetermined item is the ratio obtained by dividing the sales amount of the corresponding item by the sales amount of all the items.

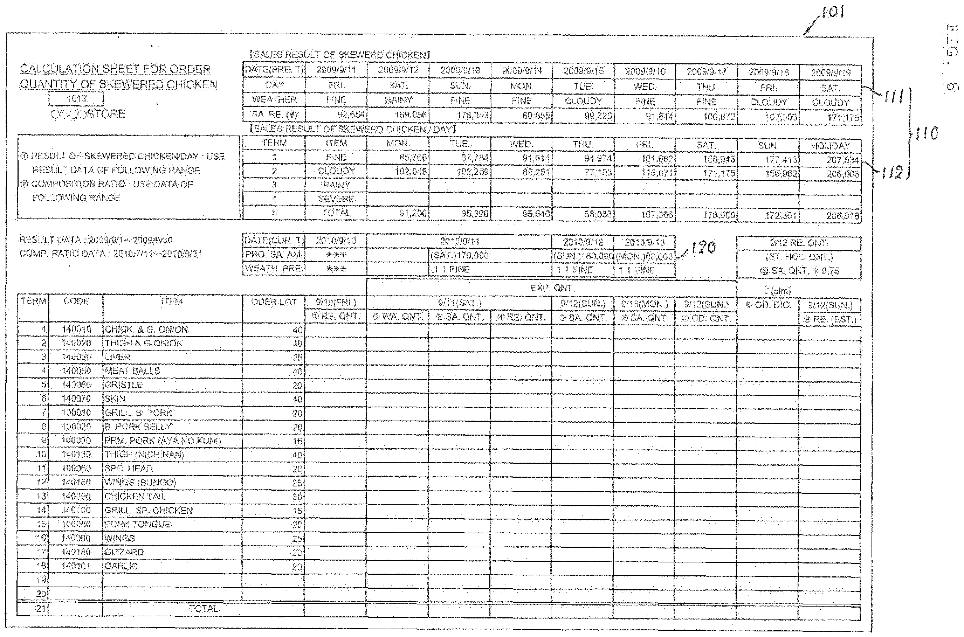

Next, referring to the display data of the sales result column 110, as shown in FIG. 6, a person in charge inputs a predicted sales amount for the skewer-grilled product and a weather forecast of the next day, two days later, three days later to a sales prediction column 120 by the input device 4 such as the keyboard 4A and the mouse 4B.

Here, for the weather forecast, fine weather, cloudy weather, rainy weather, and severe weather can be automatically displayed by appropriately selecting numbers 1, 2, 3, ··· displayed in the selection column by the mouse 4B.

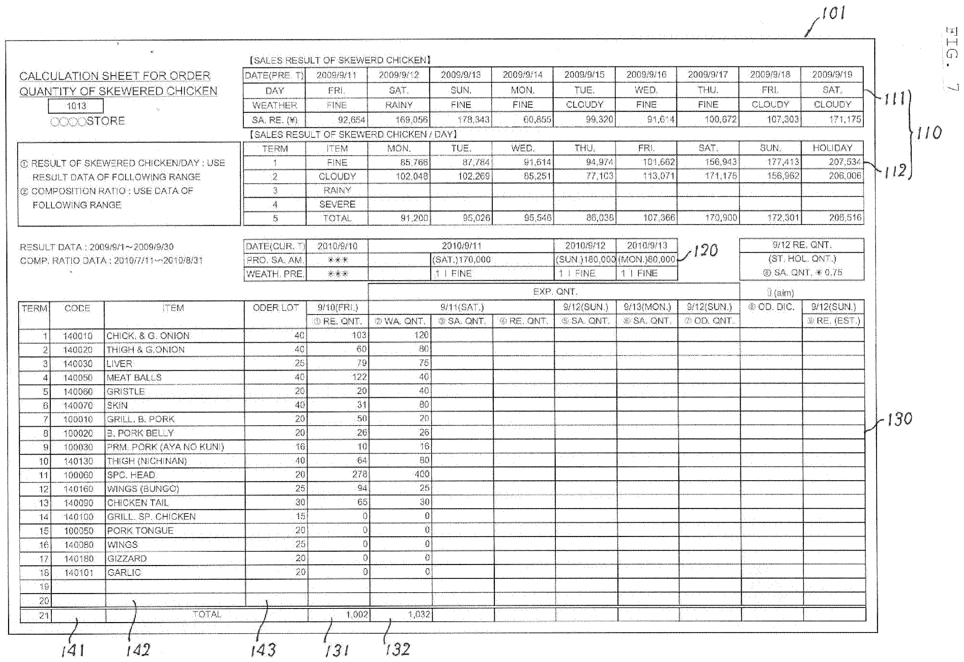

Next, as shown in FIG. 7, the person in charge inputs remaining quantities for the day of each item of the skewered material in a today's remaining quantity column 131 in an order calculation column 130.

In addition, he inputs a quantity already ordered and warehoused next day for each item of the skewered material to a next day's warehousing quantity column 132.

As shown in FIG. 7, the order calculation column 130 has an item code column 141, an item name column 142, and an order lot quantity column 143.

The item code and name of the skewer-grilled product to be handled at the corresponding store are displayed in the item code column 141 and the item name column 142.

In addition, units of quantities which can be ordered for each item of the skewered material are displayed in the order lot quantity column 143.

The central processing unit (CPU) 3A of the client computer 3 automatically performs various calculations based on various data stored in the external storage device 3F and the internal storage device 3D by inputting the quantities of each item of the skewered material in the today's remaining quantity column 131 and the next day's warehousing quantity column 132.

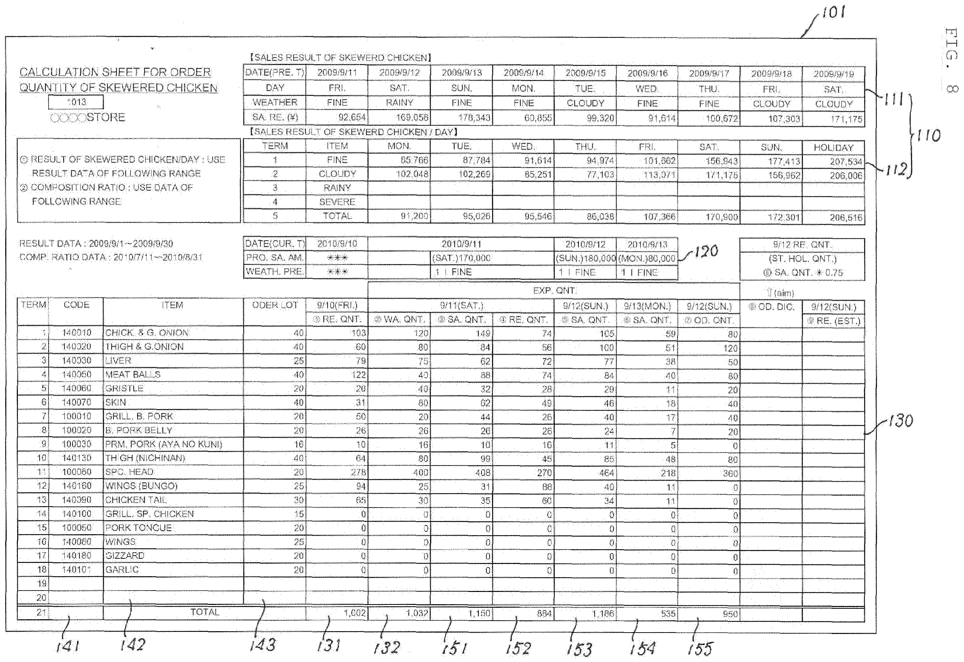

As shown in FIG. 8, prospective sales quantities for the next day of each item of the skewer-grilled product are calculated and displayed in a next day's sales prospective column 151 of the order calculation column 130.

The prospective sales quantity for the next day is calculated by multiplying a sales composition ratio $A_1$ of the corresponding item by a predicted sales amount of a skewer-grilled product for the next day input to the sales prediction column 120 and by dividing the obtained value by a sales unit price B of the corresponding item.

For example, in the case of the item "chicken and green onions", if the sales composition ratio $A_1$ is set to 0.105 and the sales unit price B is set to 120, the prospective sales quantity for the next day is calculated as follows:

```
170,000 × A / B = 170,000 × 0.105 / 120 = 149
```

The prospective remaining quantities for the next day of each item of the skewer-grilled product are calculated and displayed in a next day's remaining prospective column 152.

The prospective remaining quantity for the next day is calculated by adding the quantity warehoused next day to the remaining quantity for the day and subtracting the prospective sales quantity for the next day from the obtained value.

For example, in the case of the item "chicken and green onions", the prospective remaining quantity for the next day is calculated as follows:

```
103 + 120 - 149 = 74
```

The prospective sales quantity for the day after next of each item of the skewer-grilled product is calculated and displayed in an after two days' sales prospective column 153.

The prospective sales quantity for the day after next is calculated by multiplying a sales composition ratio $A_2$ of the corresponding item by a predicted sales amount of a skewer-grilled product for the day after next input to the sales prediction column 120 and by dividing the obtained value by a sales unit price V of the corresponding item.

For example, in the case of the item "chicken and green onions", if the sales composition ratio $A_2$ is set to 0.070 and the sales unit price B is set to 120, the prospective sales quantity for the day after next is calculated as follows:

$$180{,}000 \times A / B = 180{,}000 \times 0.07 / 120 = 105$$

Similarly, prospective sales quantities of each item of the skewer-grilled product after three days are calculated and displayed in an after three days' sales prospective column 154.

The prospective sales quantity after three days is calculated by multiplying a sales composition ratio $A_3$ of the corresponding item by a predicted sales value of a skewer-grilled product after three days input to the sales prediction column 120 and by dividing the obtained value by the sales unit price B of the corresponding item.

For example, in the case of the item "chicken and green onions", if the sales composition ratio $A_3$ is set to 0.088 and the sales unit price B is set to 120, the prospective sales quantity after three days is calculated as follows:

$$80{,}000 \times A / B = 80{,}000 \times 0.088 / 120 = 59$$

As shown in FIG. 8, assumed order quantities for the day after next of each item of the skewer-grilled product are calculated and displayed in an after two days' order assumption quantity column 155.

The assumed order quantity for the day after next is calculated by multiplying the prospective sales quantity after three days by the appropriate inventory ratio C, adding the prospective sales quantity for the day after next, and subtracting the prospective remaining quantity for the next day. The obtained quantity is compared with the unit of the order lot quantity, and the assumed order quantity for the day after next is calculated as the number of integral multiples of the nearest order lot quantity.

For example, in the case of the item "chicken and green onions", if the appropriate inventory ratio C is set to 0.80, the assumed order quantity for the day after next is calculated as follows:

$$59 \times 0.80 + 105 - 74 = 78$$

If this numerical value is compared with a unit 40 of the order lot quantity,
Assumed order quantity for the day after next = 80

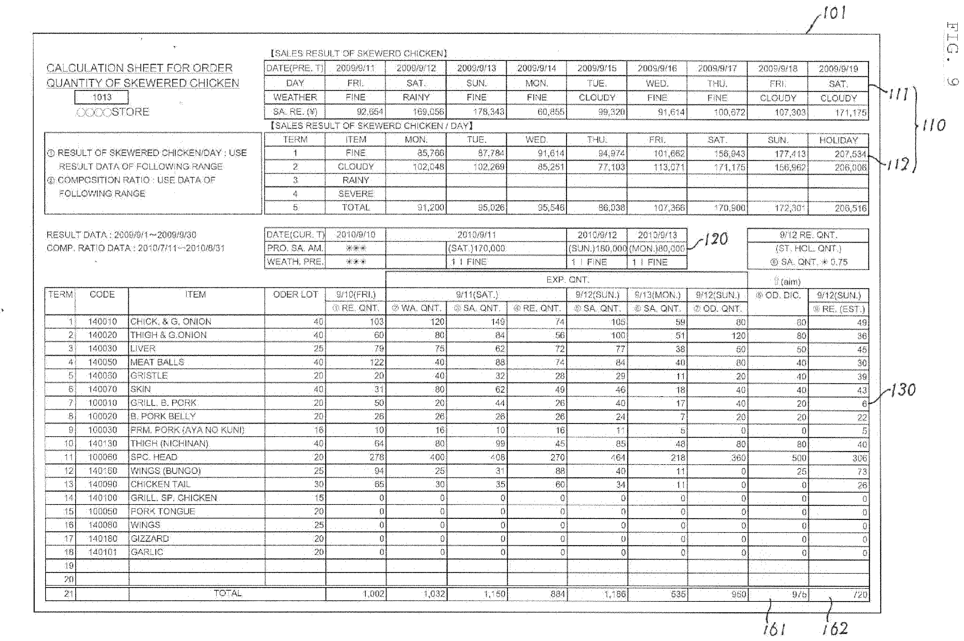

Here, the person in charge reviews the prospective sales quantities of each item of the skewered material over three days, and as shown in FIG. 9, inputs an order determination quantity for the day after next to an after two days' order decision quantity column 161.

By doing so, the prospective remaining quantities for the day after next of each item of the skewer-grilled product are calculated and displayed in an after two days' sales prospective quantity column 162.

The prospective remaining quantity for the day after next is calculated by adding the order determination quantity for the day after next to the prospective remaining quantity for the next day and subtracting the prospective sales quantity for the day after next.

For example, in the case of the item "chicken and green onions", the prospective remaining quantity for the day after next is calculated as follows:

$$74 + 80 - 105 = 49$$

Here, if the prospective remaining quantity for the day after next exceeds a standard holding quantity D, caution and warning are displayed on the items of the skewered material in yellow or red depending on the extent of the excess quantity.

For example, if the standard holding quantity D is set to the prospective sales quantity for the day after next, the extent of the excess quantity can be understood by dividing the prospective remaining quantity for the day after next by the prospective sales quantity for the day after next.

Then, when the divided numerical value is equal to or greater than 1.0, the background of the corresponding cell is displayed in yellow and attention is given to reconfirm the order quantity. When the numerical value is equal to or greater than 2.0, the background of the corresponding cell is displayed in red and a warning is issued to review the order quantity.

For example, in the case of the item "chicken and green onions",

$$74 + 80 - 105 = 49$$

If the numerical value is divided by the prospective sales quantity for the day after next,

$$49 \: / \: 105 = 0.47$$

If the numerical value is equal to or smaller than 1.0, it is judged that the prospective remaining quantity for the day after next is appropriate.

As described above, the person in charge reconfirms the order determination quantities for the day after next of each item of the skewered material by referring to the prospective remaining quantity for the day after next and the caution and warning display, and as shown in FIG. 9, inputs the final order determination quantity for the day after next to the after two days' order decision quantity column 161.

After executing the above manipulation, the person in charge presses a button overwriting and preserving the order calculation sheet 101 in the client computer 3 to decide the order calculation sheet 101 of the corresponding day.

As a result, the order calculation sheet 101 created on the corresponding day is stored in the order contact table file 32 of the client computer 3.

After the above manipulation, the person in charge can print the order calculation sheet 101 by the printer 5B if pressing a print button in the client computer 3.

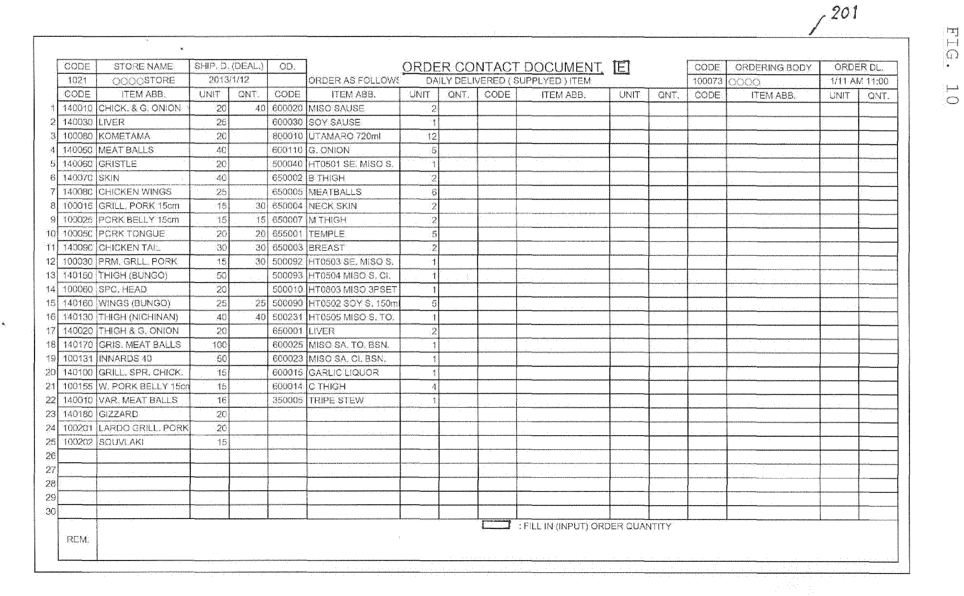

Further, as shown in FIG. 10, an order contact document 201 in which the order determination quantities for the day after next of each item of the skewered material are described can also be created and printed at the same time.

In addition, if the person in charge presses a transmission button in the client computer 3, the data stored in the order contact table file 32 is transmitted to the server computer 2 via the network 4 by the transmitting/receiving device 3E.

As a result, the manufacturing factory can ship the order determination quantities of the day after next for each item of the skewered material to the corresponding store.

According to the order assistance system of the present invention, it is possible to place an order to the manufacturing factory in a long-term view, taking account of the inventory in the store.

In addition, since the order quantity can be substantially automatically determined, it is possible to readily determine the order quantity even by an inexperienced person who works at a store for a little while.

In the above embodiment, when the order contact table file 32 is set up in the client computer 3 installed in the store, data is transmitted from the code master file 21 and the sales result data file 22 of the server computer 2, but the code master file 21 and the sales result data file 22 may be stored in the external storage device 3F of the client computer 3 at predetermined intervals.

In addition, the order assistance system of the present invention can also be applied to fresh foods and daily foods which quickly deteriorate in quality and are difficult to be preserved for a long period of time.

In addition, the order assistance system of the present invention can also be applied to beverages whose quality does not deteriorate so quickly and whose long-term preservation is not so difficult, for example, alcoholic beverages such as beer, seishu, shochu, and Shaoxing rice wine and soft drink such as oolong tea, juice, and cola.

In particular, when the order assistance system is applied to alcoholic beverages such as beer, seishu, shochu, and Shaoxing rice wine whose consumption varies greatly depending on a season, weather or the like, it is very effective in predicting and determining the order quantity.

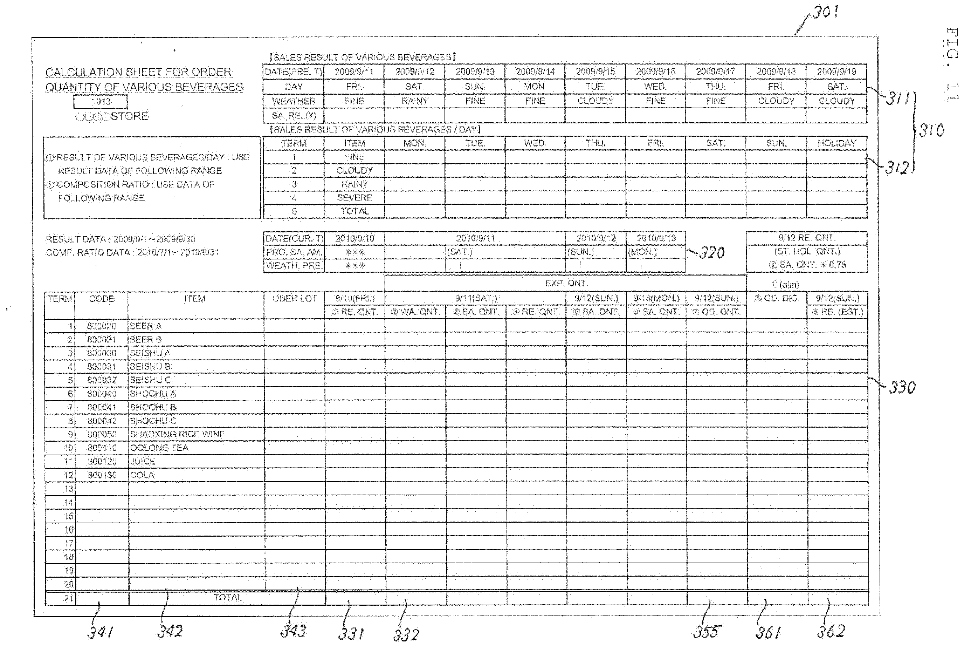

When the order assistance system is applied to beverages, since the process of determining the order quantity is different, apart from the order calculation sheet 101 for the skewer-grilled product, it is preferable to display and print an order calculation sheet 301 for the beverage as shown in FIG. 11.

Similar to the order calculation sheet 101, a sales result column 310 including a same month and day of the previous year result column 311 in which a sales result of beverage is displayed together with a day of the week and weather and a result column for each day of the week and each weather condition 312 displayed for each day of the week and each weather is formed even in the order calculation sheet 301.

Then, the predicted sales amount of the beverage and the weather forecast are input in a sales prediction column 320 with reference to the display data of the sales result column 310.

Further, similar to the order calculation sheet 101, an order calculation column 330 having an item code column 341, an item name column 342, and an order lot quantity column 343 is formed.

Then, the defined order quantity is input to an after two days' order decision quantity column 361 in a manner of inputting the remaining quantity for the day to a today's remaining quantity column 331, inputting the quantity that is already ordered and warehoused in the next day to a next day's warehouse quantity column 332, and the like.

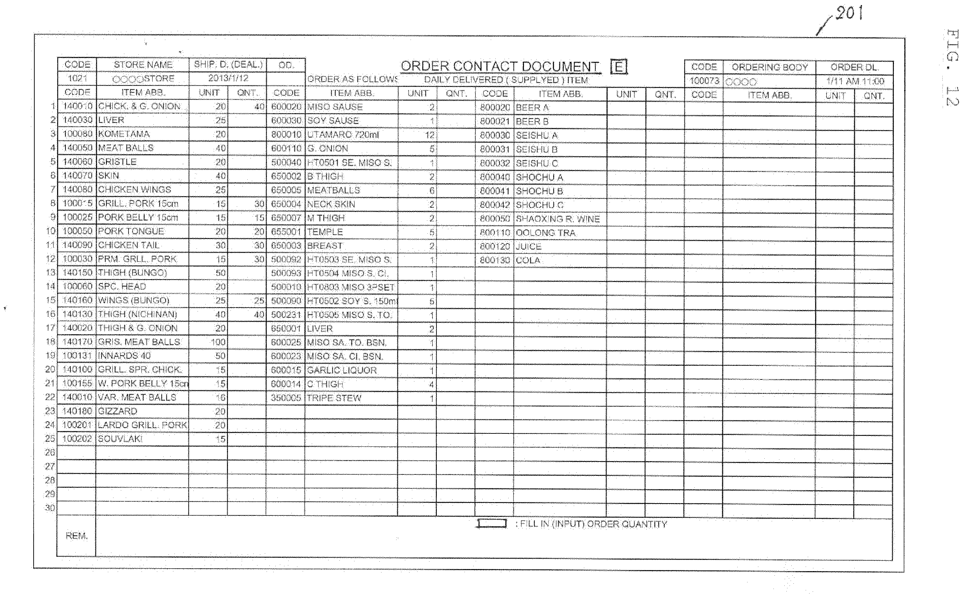

Meanwhile, even when applied to beverages, in order to make it possible to understand the order quantities of both the skewer-grilled product and the beverages at a glance, as shown in FIG. 12, it is preferable to display the order quantity of the beverage in the order contact document 201.

Further, in the above embodiment, the sales result data file 22 stores the sales detail data for each item of the skewered material of the same month of the previous year and the last two months, but the period of data to be stored such as the same month of the previous year and the last two months, or the last three months can be appropriately determined.

In addition, in the same month and day result column 111, the sales results of the skewer-grilled product are displayed over 9 days from the day following the corresponding day of the previous year, but the sales results are not necessarily displayed over 9 days from the next day.

However, since sales vary considerably depending on a day of the week, it is preferable to display at least the sales results over seven days from the next day.

**Reference Signs List**

1 Order assistance system
2 Server computer
3 Client computer
4 Network
21 Code master file
22 Sales result data file
31 Item data file
32 Order contact table file
33 Variable data file
101 Order calculation sheet
110 Sales result column
120 Sales prediction column
130 Order calculation column

**Claims**

1. An order assistance system, comprising:

   a server computer which is installed in a manufacturing factory;
   a client computer which is installed in a store; and
   a network connecting between the server computer and the client computer,
   wherein the server computer stores a sales result data file in which sales detail data for each item of a skewered material for the same month of the previous year and the last several months are stored and a code master file in which items of a skewered material, identification codes related to stores and the like, a name, fixed items such as a unit price, and a calendar are stored, and
   the client computer stores in an external storage device an item data file in which the items of the skewered material to be handled at the corresponding store and appropriately set inventory quantities are stored and an order contact table file which can describe order quantities of each item of the skewered material in a tabular format, and temporarily stores in an internal storage device a variable data file constituted by daily varying data like weather, a sales amount, predicted values and definitive values of inventory quantities and order quantities for the day of each item of the skewered material, and the like.

2. The order assistance system according to claim 1, wherein in the client computer, an order calculation sheet is displayed on a display screen, and the sales result of the skewer-grilled product over several days from the same day of the previous year are displayed in a sales result column for each day of the week and each weather condition.

3. The order assistance system according to claim 2, wherein in the client computer, by inputting predicted sales amount of the skewer-grilled product and weather forecast in a sales prediction column, and inputting inventory quantities for the day and inventory quantities for the next day of each item of the skewered material in an order calculation column, automatic calculation is executed based on a standard holding quantity and the above-mentioned data and an order quantity for the day after next is displayed in the order calculation column.

4. The order assistance system according to claim 3, wherein in the order calculation column, when estimated inventory quantity exceeds the standard holding quantity, a warning display may be made in yellow or red depending on the extent of the excess quantity in the item of the skewered material.

5. The order assistance system according to any one of claims 1 to 4, wherein the order assistance system is applied to perishable foods or daily foods in place of the skewered material or together with the skewered material.

6. The order assistance system according to any one of claims 1 to 4, wherein the order assistance system is applied to beverage in place of the skewered material or together with the skewered material.

FIG. 1

FIG. 2

FIG. 3

FIG. 4

FIG. 5

EP 3 509 029 A1

CALCULATION SHEET FOR ORDER
QUANTITY OF SKEWERED CHICKEN

1013

○○○○STORE

101 · 111 · 110 · 112

【SALES RESULT OF SKEWERD CHICKEN】

| DATE(PRE. T) | 2009/9/11 | 2009/9/12 | 2009/9/13 | 2009/9/14 | 2009/9/15 | 2009/9/16 | 2009/9/17 | 2009/9/18 | 2009/9/19 |
|---|---|---|---|---|---|---|---|---|---|
| DAY | FRI. | SAT. | SUN. | MON. | TUE. | WED. | THU. | FRI. | SAT. |
| WEATHER | FINE | RAINY | FINE | FINE | CLOUDY | FINE | FINE | CLOUDY | CLOUDY |
| SA. RE. (¥) | 92,654 | 169,056 | 178,343 | 60,855 | 99,320 | 91,614 | 100,672 | 107,303 | 171,175 |

【SALES RESULT OF SKEWERD CHICKEN / DAY】

| TERM | ITEM | MON. | TUE. | WED. | THU. | FRI. | SAT. | SUN. | HOLIDAY |
|---|---|---|---|---|---|---|---|---|---|
| 1 | FINE | 85,766 | 87,784 | 91,614 | 94,974 | 101,662 | 156,943 | 177,413 | 207,534 |
| 2 | CLOUDY | 102,048 | 102,269 | 85,251 | 77,103 | 113,071 | 171,175 | 156,962 | 206,006 |
| 3 | RAINY | | | | | | | | |
| 4 | SEVERE | | | | | | | | |
| 5 | TOTAL | 91,200 | 95,026 | 95,546 | 86,038 | 107,366 | 170,900 | 172,301 | 206,516 |

① RESULT OF SKEWERED CHICKEN/DAY : USE
   RESULT DATA OF FOLLOWING RANGE
② COMPOSITION RATIO : USE DATA OF
   FOLLOWING RANGE

RESULT DATA : 2009/9/1〜2009/9/30
COMP. RATIO DATA : 2010/7/11〜2010/8/31

| DATE(CUR. T) | 2010/9/10 | 2010/9/11 | | 2010/9/12 | 2010/9/13 | |
|---|---|---|---|---|---|---|
| PRO. SA. AM. | ✳✳✳ | (SAT.) | | (SUN.) | (MON.) | |
| WEATH. PRE. | ✳✳✳ | | | | | |

9/12 RE. QNT.
(ST. HOL. QNT.)
⑨ SA. QNT. ✳ 0.75

| TERM | CODE | ITEM | ODER LOT | EXP. QNT. | | | | | | | ⇩ (aim) | 9/12(SUN.) |
|---|---|---|---|---|---|---|---|---|---|---|---|---|
| | | | | 9/10(FRI.) | 9/11(SAT.) | | | 9/12(SUN.) | 9/13(MON.) | 9/12(SUN.) | | |
| | | | | ① RE. QNT. | ② WA. QNT. | ③ SA. QNT. | ④ RE. QNT. | ⑤ SA. QNT. | ⑥ SA. QNT. | ⑦ OD. QNT. | ⑧ OD. DIC. | ⑩ RE. (EST.) |
| 1 | 140010 | CHICK. & G. ONION | 40 | | | | | | | | | |
| 2 | 140020 | THIGH & G.ONION | 40 | | | | | | | | | |
| 3 | 140030 | LIVER | 25 | | | | | | | | | |
| 4 | 140050 | MEAT BALLS | 40 | | | | | | | | | |
| 5 | 140060 | GRISTLE | 20 | | | | | | | | | |
| 6 | 140070 | SKIN | 40 | | | | | | | | | |
| 7 | 100010 | GRILL. B. PORK | 20 | | | | | | | | | |
| 8 | 100020 | B. PORK BELLY | 20 | | | | | | | | | |
| 9 | 100030 | PRM. PORK (AYA NO KUNI) | 16 | | | | | | | | | |
| 10 | 140130 | THIGH (NICHINAN) | 40 | | | | | | | | | |
| 11 | 100060 | SPC. HEAD | 20 | | | | | | | | | |
| 12 | 140160 | WINGS (BUNGO) | 25 | | | | | | | | | |
| 13 | 140090 | CHICKEN TAIL | 30 | | | | | | | | | |
| 14 | 140100 | GRILL. SP. CHICKEN | 15 | | | | | | | | | |
| 15 | 100050 | PORK TONGUE | 20 | | | | | | | | | |
| 16 | 140080 | WINGS | 25 | | | | | | | | | |
| 17 | 140180 | GIZZARD | 20 | | | | | | | | | |
| 18 | 140101 | GARLIC | 20 | | | | | | | | | |
| 19 | | | | | | | | | | | | |
| 20 | | | | | | | | | | | | |
| 21 | | TOTAL | | | | | | | | | | |

FIG. 6

**CALCULATION SHEET FOR ORDER QUANTITY OF SKEWERED CHICKEN**

1013

○○○○STORE

① RESULT OF SKEWERED CHICKEN/DAY : USE RESULT DATA OF FOLLOWING RANGE
② COMPOSITION RATIO : USE DATA OF FOLLOWING RANGE

RESULT DATA : 2009/9/1〜2009/9/30
COMP. RATIO DATA : 2010/7/11〜2010/8/31

【SALES RESULT OF SKEWERD CHICKEN】

| DATE(PRE. T) | 2009/9/11 | 2009/9/12 | 2009/9/13 | 2009/9/14 | 2009/9/15 | 2009/9/16 | 2009/9/17 | 2009/9/18 | 2009/9/19 |
|---|---|---|---|---|---|---|---|---|---|
| DAY | FRI. | SAT. | SUN. | MON. | TUE. | WED. | THU. | FRI. | SAT. |
| WEATHER | FINE | RAINY | FINE | FINE | CLOUDY | FINE | FINE | CLOUDY | CLOUDY |
| SA. RE. (¥) | 92,654 | 169,056 | 178,343 | 60,855 | 99,320 | 91,614 | 100,672 | 107,303 | 171,175 |

【SALES RESULT OF SKEWERD CHICKEN / DAY】

| TERM | ITEM | MON. | TUE. | WED. | THU. | FRI. | SAT. | SUN. | HOLIDAY |
|---|---|---|---|---|---|---|---|---|---|
| 1 | FINE | 85,766 | 87,784 | 91,614 | 94,974 | 101,662 | 156,943 | 177,413 | 207,534 |
| 2 | CLOUDY | 102,048 | 102,269 | 85,251 | 77,103 | 113,071 | 171,175 | 156,962 | 206,006 |
| 3 | RAINY | | | | | | | | |
| 4 | SEVERE | | | | | | | | |
| 5 | TOTAL | 91,200 | 95,026 | 95,546 | 86,038 | 107,366 | 170,900 | 172,301 | 206,516 |

| DATE(CUR. T) | 2010/9/10 | 2010/9/11 | | 2010/9/12 | 2010/9/13 |
|---|---|---|---|---|---|
| PRO. SA. AM. | ✳✳✳ | (SAT.)170,000 | | (SUN.)180,000 | (MON.)80,000 |
| WEATH. PRE. | ✳✳✳ | 1 | FINE | 1 | FINE | 1 | FINE |

9/12 RE. QNT.
(ST. HOL. QNT.)
⑧ SA. QNT. ✳ 0.75

| TERM | CODE | ITEM | ODER LOT | EXP. QNT. | | | | | | ⇑ (aim) | |
|---|---|---|---|---|---|---|---|---|---|---|---|
| | | | | 9/10(FRI.) | 9/11(SAT.) | | | 9/12(SUN.) | 9/13(MON.) | 9/12(SUN.) | ⑧ OD. DIC. | 9/12(SUN.) |
| | | | | ① RE. QNT. | ② WA. QNT. | ③ SA. QNT. | ④ RE. QNT. | ⑤ SA. QNT. | ⑥ SA. QNT. | ⑦ OD. QNT. | | ⑨ RE. (EST.) |
| 1 | 140010 | CHICK. & G. ONION | 40 | | | | | | | | | |
| 2 | 140020 | THIGH & G.ONION | 40 | | | | | | | | | |
| 3 | 140030 | LIVER | 25 | | | | | | | | | |
| 4 | 140050 | MEAT BALLS | 40 | | | | | | | | | |
| 5 | 140060 | GRISTLE | 20 | | | | | | | | | |
| 6 | 140070 | SKIN | 40 | | | | | | | | | |
| 7 | 100010 | GRILL. B. PORK | 20 | | | | | | | | | |
| 8 | 100020 | B. PORK BELLY | 20 | | | | | | | | | |
| 9 | 100030 | PRM. PORK (AYA NO KUNI) | 16 | | | | | | | | | |
| 10 | 140130 | THIGH (NICHINAN) | 40 | | | | | | | | | |
| 11 | 100060 | SPC. HEAD | 20 | | | | | | | | | |
| 12 | 140160 | WINGS (BUNGO) | 25 | | | | | | | | | |
| 13 | 140090 | CHICKEN TAIL | 30 | | | | | | | | | |
| 14 | 140100 | GRILL. SP. CHICKEN | 15 | | | | | | | | | |
| 15 | 100050 | PORK TONGUE | 20 | | | | | | | | | |
| 16 | 140080 | WINGS | 25 | | | | | | | | | |
| 17 | 140180 | GIZZARD | 20 | | | | | | | | | |
| 18 | 140101 | GARLIC | 20 | | | | | | | | | |
| 19 | | | | | | | | | | | | |
| 20 | | | | | | | | | | | | |
| 21 | | TOTAL | | | | | | | | | | |

101

111

110

112

120

EP 3 509 029 A1

FIG. 7

CALCULATION SHEET FOR ORDER
QUANTITY OF SKEWERED CHICKEN

| 1013 |

○○○○STORE

① RESULT OF SKEWERED CHICKEN/DAY : USE
   RESULT DATA OF FOLLOWING RANGE
② COMPOSITION RATIO : USE DATA OF
   FOLLOWING RANGE

RESULT DATA : 2009/9/1～2009/9/30
COMP. RATIO DATA : 2010/7/11～2010/8/31

【SALES RESULT OF SKEWERD CHICKEN】

| DATE(PRE. T) | 2009/9/11 | 2009/9/12 | 2009/9/13 | 2009/9/14 | 2009/9/15 | 2009/9/16 | 2009/9/17 | 2009/9/18 | 2009/9/19 |
|---|---|---|---|---|---|---|---|---|---|
| DAY | FRI. | SAT. | SUN. | MON. | TUE. | WED. | THU. | FRI. | SAT. |
| WEATHER | FINE | RAINY | FINE | FINE | CLOUDY | FINE | FINE | CLOUDY | CLOUDY |
| SA. RE. (¥) | 92,654 | 169,056 | 178,343 | 60,855 | 99,320 | 91,614 | 100,672 | 107,303 | 171,175 |

【SALES RESULT OF SKEWERED CHICKEN / DAY】

| TERM | ITEM | MON. | TUE. | WED. | THU. | FRI. | SAT. | SUN. | HOLIDAY |
|---|---|---|---|---|---|---|---|---|---|
| 1 | FINE | 85,766 | 87,784 | 91,614 | 94,974 | 101,662 | 156,943 | 177,413 | 207,534 |
| 2 | CLOUDY | 102,048 | 102,269 | 85,251 | 77,103 | 113,071 | 171,175 | 156,962 | 206,006 |
| 3 | RAINY | | | | | | | | |
| 4 | SEVERE | | | | | | | | |
| 5 | TOTAL | 91,200 | 95,026 | 95,546 | 86,038 | 107,366 | 170,900 | 172,301 | 206,516 |

| DATE(CUR. T) | 2010/9/10 | 2010/9/11 | | 2010/9/12 | 2010/9/13 | | 9/12 RE. QNT. |
|---|---|---|---|---|---|---|---|
| PRO. SA. AM. | ＊＊＊ | (SAT.)170,000 | | (SUN.)180,000 | (MON.)80,000 | | (ST. HOL. QNT.) |
| WEATH. PRE. | ＊＊＊ | 1 ┃ FINE | | 1 ┃ FINE | 1 ┃ FINE | | ⑧ SA. QNT. ＊ 0.75 |

| | | | | | EXP. QNT. | | | | | Û (aim) |
|---|---|---|---|---|---|---|---|---|---|---|
| TERM | CODE | ITEM | ODER LOT | 9/10(FRI.) | 9/11(SAT.) | | | 9/12(SUN.) | 9/13(MON.) | 9/12(SUN.) | ⑧ OD. DIC. | 9/12(SUN.) |
| | | | | ① RE. QNT. | ② WA. QNT. | ③ SA. QNT. | ④ RE. QNT. | ⑤ SA. QNT. | ⑥ SA. QNT. | ⑦ OD. QNT. | | ⑨ RE. (EST.) |
| 1 | 140010 | CHICK. & G. ONION | 40 | 103 | 120 | | | | | | | |
| 2 | 140020 | THIGH & G.ONION | 40 | 60 | 80 | | | | | | | |
| 3 | 140030 | LIVER | 25 | 79 | 75 | | | | | | | |
| 4 | 140050 | MEAT BALLS | 40 | 122 | 40 | | | | | | | |
| 5 | 140060 | GRISTLE | 20 | 20 | 40 | | | | | | | |
| 6 | 140070 | SKIN | 40 | 31 | 80 | | | | | | | |
| 7 | 100010 | GRILL. B. PORK | 20 | 50 | 20 | | | | | | | |
| 8 | 100020 | B. PORK BELLY | 20 | 26 | 26 | | | | | | | |
| 9 | 100030 | PRM. PORK (AYA NO KUNI) | 16 | 10 | 16 | | | | | | | |
| 10 | 140130 | THIGH (NICHINAN) | 40 | 64 | 80 | | | | | | | |
| 11 | 100060 | SPC. HEAD | 20 | 278 | 400 | | | | | | | |
| 12 | 140160 | WINGS (BUNGO) | 25 | 94 | 25 | | | | | | | |
| 13 | 140090 | CHICKEN TAIL | 30 | 65 | 30 | | | | | | | |
| 14 | 140100 | GRILL. SP. CHICKEN | 15 | 0 | 0 | | | | | | | |
| 15 | 100050 | PORK TONGUE | 20 | 0 | 0 | | | | | | | |
| 16 | 140080 | WINGS | 25 | 0 | 0 | | | | | | | |
| 17 | 140180 | GIZZARD | 20 | 0 | 0 | | | | | | | |
| 18 | 140101 | GARLIC | 20 | 0 | 0 | | | | | | | |
| 19 | | | | | | | | | | | | |
| 20 | | | | | | | | | | | | |
| 21 | | TOTAL | | 1,002 | 1,032 | | | | | | | |

FIG. 8

EP 3 509 029 A1

CALCULATION SHEET FOR ORDER
QUANTITY OF SKEWERED CHICKEN

| 1013 |

○○○○STORE

**[SALES RESULT OF SKEWERD CHICKEN]**

| DATE(PRE. T) | 2009/9/11 | 2009/9/12 | 2009/9/13 | 2009/9/14 | 2009/9/15 | 2009/9/16 | 2009/9/17 | 2009/9/18 | 2009/9/19 |
|---|---|---|---|---|---|---|---|---|---|
| DAY | FRI. | SAT. | SUN. | MON. | TUE. | WED. | THU. | FRI. | SAT. |
| WEATHER | FINE | RAINY | FINE | FINE | CLOUDY | FINE | FINE | CLOUDY | CLOUDY |
| SA. RE. (¥) | 92,654 | 169,056 | 178,343 | 60,855 | 99,320 | 91,614 | 100,672 | 107,303 | 171,175 |

① RESULT OF SKEWERED CHICKEN/DAY : USE
   RESULT DATA OF FOLLOWING RANGE
② COMPOSITION RATIO : USE DATA OF
   FOLLOWING RANGE

**[SALES RESULT OF SKEWERED CHICKEN / DAY]**

| TERM | ITEM | MON. | TUE. | WED. | THU. | FRI. | SAT. | SUN. | HOLIDAY |
|---|---|---|---|---|---|---|---|---|---|
| 1 | FINE | 85,766 | 87,784 | 91,614 | 94,974 | 101,662 | 156,943 | 177,413 | 207,534 |
| 2 | CLOUDY | 102,048 | 102,269 | 85,251 | 77,103 | 113,071 | 171,175 | 156,962 | 206,006 |
| 3 | RAINY | | | | | | | | |
| 4 | SEVERE | | | | | | | | |
| 5 | TOTAL | 91,200 | 95,026 | 95,546 | 86,038 | 107,366 | 170,900 | 172,301 | 206,516 |

RESULT DATA : 2009/9/1～2009/9/30
COMP. RATIO DATA : 2010/7/11～2010/8/31

| DATE(CUR. T) | 2010/9/10 | 2010/9/11 | | 2010/9/12 | 2010/9/13 | | 9/12 RE. QNT. |
|---|---|---|---|---|---|---|---|
| PRO. SA. AM. | ✱✱✱ | (SAT.)170,000 | | (SUN.)180,000 | (MON.)80,000 | | (ST. HOL. QNT.) |
| WEATH. PRE. | ✱✱✱ | 1 I FINE | | 1 I FINE | 1 I FINE | | ⑧ SA. QNT. ✱ 0.75 |

| TERM | CODE | ITEM | ODER LOT | 9/10(FRI.) ① RE. QNT. | 9/11(SAT.) ② WA. QNT. | 9/11(SAT.) ③ SA. QNT. | 9/11(SAT.) ④ RE. QNT. | 9/12(SUN.) ⑤ SA. QNT. | 9/13(MON.) ⑥ SA. QNT. | 9/12(SUN.) ⑦ OD. QNT. | ⑨ OD. DIC. | 9/12(SUN.) ⑧ RE. (EST.) |
|---|---|---|---|---|---|---|---|---|---|---|---|---|
| 1 | 140010 | CHICK. & G. ONION | 40 | 103 | 120 | 149 | 74 | 105 | 59 | 80 | | |
| 2 | 140020 | THIGH & G.ONION | 40 | 60 | 80 | 84 | 56 | 100 | 51 | 120 | | |
| 3 | 140030 | LIVER | 25 | 79 | 75 | 62 | 72 | 77 | 38 | 50 | | |
| 4 | 140050 | MEAT BALLS | 40 | 122 | 40 | 88 | 74 | 84 | 40 | 80 | | |
| 5 | 140060 | GRISTLE | 20 | 20 | 40 | 32 | 28 | 29 | 11 | 20 | | |
| 6 | 140070 | SKIN | 40 | 31 | 80 | 62 | 49 | 46 | 18 | 40 | | |
| 7 | 100010 | GRILL. B. PORK | 20 | 50 | 20 | 44 | 26 | 40 | 17 | 40 | | |
| 8 | 100020 | B. PORK BELLY | 20 | 26 | 26 | 26 | 26 | 24 | 7 | 20 | | |
| 9 | 100030 | PRM. PORK (AYA NO KUNI) | 16 | 10 | 16 | 10 | 16 | 11 | 5 | 0 | | |
| 10 | 140130 | THIGH (NICHINAN) | 40 | 64 | 80 | 99 | 45 | 85 | 48 | 80 | | |
| 11 | 100060 | SPC. HEAD | 20 | 278 | 400 | 408 | 270 | 464 | 218 | 360 | | |
| 12 | 140160 | WINGS (BUNGO) | 25 | 94 | 25 | 31 | 88 | 40 | 11 | 0 | | |
| 13 | 140090 | CHICKEN TAIL | 30 | 65 | 30 | 35 | 60 | 34 | 11 | 0 | | |
| 14 | 140100 | GRILL. SP. CHICKEN | 15 | 0 | 0 | 0 | 0 | 0 | 0 | 0 | | |
| 15 | 100050 | PORK TONGUE | 20 | 0 | 0 | 0 | 0 | 0 | 0 | 0 | | |
| 16 | 140080 | WINGS | 25 | 0 | 0 | 0 | 0 | 0 | 0 | 0 | | |
| 17 | 140180 | GIZZARD | 20 | 0 | 0 | 0 | 0 | 0 | 0 | 0 | | |
| 18 | 140101 | GARLIC | 20 | 0 | 0 | 0 | 0 | 0 | 0 | 0 | | |
| 19 | | | | | | | | | | | | |
| 20 | | | | | | | | | | | | |
| 21 | | TOTAL | | 1,002 | 1,032 | 1,150 | 884 | 1,186 | 535 | 950 | | |

EXP. QNT.

⇧ (aim)

FIG. 9

EP 3 509 029 A1

CALCULATION SHEET FOR ORDER
QUANTITY OF SKEWERED CHICKEN

1013

○○○○STORE

① RESULT OF SKEWERED CHICKEN/DAY : USE
  RESULT DATA OF FOLLOWING RANGE
② COMPOSITION RATIO : USE DATA OF
  FOLLOWING RANGE

RESULT DATA : 2009/9/1～2009/9/30
COMP. RATIO DATA : 2010/7/11～2010/8/31

【SALES RESULT OF SKEWERD CHICKEN】

| DATE(PRE. T) | 2009/9/11 | 2009/9/12 | 2009/9/13 | 2009/9/14 | 2009/9/15 | 2009/9/16 | 2009/9/17 | 2009/9/18 | 2009/9/19 |
|---|---|---|---|---|---|---|---|---|---|
| DAY | FRI. | SAT. | SUN. | MON. | TUE. | WED. | THU. | FRI. | SAT. |
| WEATHER | FINE | RAINY | FINE | FINE | CLOUDY | FINE | FINE | CLOUDY | CLOUDY |
| SA. RE. (¥) | 92,654 | 169,056 | 178,343 | 60,855 | 99,320 | 91,614 | 100,672 | 107,303 | 171,175 |

【SALES RESULT OF SKEWERD CHICKEN / DAY】

| TERM | ITEM | MON. | TUE. | WED. | THU. | FRI. | SAT. | SUN. | HOLIDAY |
|---|---|---|---|---|---|---|---|---|---|
| 1 | FINE | 85,766 | 87,784 | 91,614 | 94,974 | 101,662 | 156,943 | 177,413 | 207,534 |
| 2 | CLOUDY | 102,048 | 102,269 | 85,251 | 77,103 | 113,071 | 171,175 | 156,962 | 206,006 |
| 3 | RAINY | | | | | | | | |
| 4 | SEVERE | | | | | | | | |
| 5 | TOTAL | 91,200 | 95,026 | 95,546 | 86,038 | 107,366 | 170,900 | 172,301 | 206,516 |

| DATE(CUR. T) | 2010/9/10 | 2010/9/11 | | 2010/9/12 | 2010/9/13 | 9/12 RE. QNT. |
|---|---|---|---|---|---|---|
| PRO. SA. AM. | ✱✱✱ | (SAT.)170,000 | | (SUN.)180,000 | (MON.)80,000 | (ST. HOL. QNT.) |
| WEATH. PRE. | ✱✱✱ | 1 I FINE | | 1 I FINE | 1 I FINE | ⑥ SA. QNT. ✱ 0.75 |

| TERM | CODE | ITEM | ODER LOT | 9/10(FRI.) | 9/11(SAT.) | | | 9/12(SUN.) | 9/13(MON.) | 9/12(SUN.) | ⑧ OD. DIC. | 9/12(SUN.) |
|---|---|---|---|---|---|---|---|---|---|---|---|---|
| | | | | ① RE. QNT. | ② WA. QNT. | ③ SA. QNT. | ④ RE. QNT. | ⑤ SA. QNT. | ⑤ SA. QNT. | ⑦ OD. QNT. | | ⑥ RE. (EST.) |
| 1 | 140010 | CHICK. & G. ONION | 40 | 103 | 120 | 149 | 74 | 105 | 59 | 80 | 80 | 49 |
| 2 | 140020 | THIGH & G.ONION | 40 | 60 | 80 | 84 | 56 | 100 | 51 | 120 | 80 | 36 |
| 3 | 140030 | LIVER | 25 | 79 | 75 | 62 | 72 | 77 | 38 | 50 | 50 | 45 |
| 4 | 140050 | MEAT BALLS | 40 | 122 | 40 | 88 | 74 | 84 | 40 | 80 | 40 | 30 |
| 5 | 140060 | GRISTLE | 20 | 20 | 40 | 32 | 28 | 29 | 11 | 20 | 40 | 39 |
| 6 | 140070 | SKIN | 40 | 31 | 80 | 62 | 49 | 46 | 18 | 40 | 40 | 43 |
| 7 | 100010 | GRILL. B. PORK | 20 | 50 | 20 | 44 | 26 | 40 | 17 | 40 | 20 | 6 |
| 8 | 100020 | B. PORK BELLY | 20 | 26 | 26 | 26 | 26 | 24 | 7 | 20 | 20 | 22 |
| 9 | 100030 | PRM. PORK (AYA NO KUNI) | 16 | 10 | 16 | 10 | 16 | 11 | 5 | 0 | 0 | 5 |
| 10 | 140130 | THIGH (NICHINAN) | 40 | 64 | 80 | 99 | 45 | 85 | 48 | 80 | 80 | 40 |
| 11 | 100060 | SPC. HEAD | 20 | 278 | 400 | 408 | 270 | 464 | 218 | 360 | 500 | 306 |
| 12 | 140160 | WINGS (BUNGO) | 25 | 94 | 25 | 31 | 88 | 40 | 11 | 0 | 25 | 73 |
| 13 | 140090 | CHICKEN TAIL | 30 | 65 | 30 | 35 | 60 | 34 | 11 | 0 | 0 | 26 |
| 14 | 140100 | GRILL. SP. CHICKEN | 15 | 0 | 0 | 0 | 0 | 0 | 0 | 0 | 0 | 0 |
| 15 | 100050 | PORK TONGUE | 20 | 0 | 0 | 0 | 0 | 0 | 0 | 0 | 0 | 0 |
| 16 | 140080 | WINGS | 25 | 0 | 0 | 0 | 0 | 0 | 0 | 0 | 0 | 0 |
| 17 | 140180 | GIZZARD | 20 | 0 | 0 | 0 | 0 | 0 | 0 | 0 | 0 | 0 |
| 18 | 140101 | GARLIC | 20 | 0 | 0 | 0 | 0 | 0 | 0 | 0 | 0 | 0 |
| 19 | | | | | | | | | | | | |
| 20 | | | | | | | | | | | | |
| 21 | | TOTAL | | 1,002 | 1,032 | 1,150 | 884 | 1,186 | 535 | 950 | 975 | 720 |

EXP. QNT.

⇧ (aim)

101
111
110
112
120
130
161
162

FIG. 10

201

## ORDER CONTACT DOCUMENT [E]

| CODE | STORE NAME | SHIP. D. (DEAL.) | OD. | | | | | | | | | CODE | ORDERING BODY | ORDER DL. | |
|---|---|---|---|---|---|---|---|---|---|---|---|---|---|---|---|
| 1021 | ○○○○STORE | 2013/1/12 | | ORDER AS FOLLOWS | DAILY DELIVERED ( SUPPLYED ) ITEM | | | | | | | 100073 | ○○○○ | 1/11 AM 11:00 | |
| CODE | ITEM ABB. | UNIT | QNT. | CODE | ITEM ABB. | UNIT | QNT. | CODE | ITEM ABB. | UNIT | QNT. | CODE | ITEM ABB. | UNIT | QNT. |
| 140010 | CHICK. & G. ONION | 20 | 40 | 600020 | MISO SAUSE | 2 | | | | | | | | | |
| 140030 | LIVER | 25 | | 600030 | SOY SAUSE | 1 | | | | | | | | | |
| 100080 | KOMETAMA | 20 | | 800010 | UTAMARO 720ml | 12 | | | | | | | | | |
| 140050 | MEAT BALLS | 40 | | 600110 | G. ONION | 5 | | | | | | | | | |
| 140060 | GRISTLE | 20 | | 500040 | HT0501 SE. MISO S. | 1 | | | | | | | | | |
| 140070 | SKIN | 40 | | 650002 | B THIGH | 2 | | | | | | | | | |
| 140080 | CHICKEN WINGS | 25 | | 650005 | MEATBALLS | 6 | | | | | | | | | |
| 100015 | GRILL. PORK 15cm | 15 | 30 | 650004 | NECK SKIN | 2 | | | | | | | | | |
| 100025 | PORK BELLY 15cm | 15 | 15 | 650007 | M THIGH | 2 | | | | | | | | | |
| 100050 | PORK TONGUE | 20 | 20 | 655001 | TEMPLE | 5 | | | | | | | | | |
| 140090 | CHICKEN TAIL | 30 | 30 | 650003 | BREAST | 2 | | | | | | | | | |
| 100030 | PRM. GRLL. PORK | 15 | 30 | 500092 | HT0503 SE. MISO S. | 1 | | | | | | | | | |
| 140150 | THIGH (BUNGO) | 50 | | 500093 | HT0504 MISO S. CI. | 1 | | | | | | | | | |
| 100060 | SPC. HEAD | 20 | | 500010 | HT0803 MISO 3PSET | 1 | | | | | | | | | |
| 140160 | WINGS (BUNGO) | 25 | 25 | 500090 | HT0502 SOY S. 150m | 5 | | | | | | | | | |
| 140130 | THIGH (NICHINAN) | 40 | 40 | 500231 | HT0505 MISO S. TO. | 1 | | | | | | | | | |
| 140020 | THIGH & G. ONION | 20 | | 650001 | LIVER | 2 | | | | | | | | | |
| 140170 | GRIS. MEAT BALLS | 100 | | 600025 | MISO SA. TO. BSN. | 1 | | | | | | | | | |
| 100131 | INNARDS 40 | 50 | | 600023 | MISO SA. CI. BSN. | 1 | | | | | | | | | |
| 140100 | GRILL. SPR. CHICK. | 15 | | 600015 | GARLIC LIQUOR | 1 | | | | | | | | | |
| 100155 | W. PORK BELLY 15cm | 15 | | 600014 | C THIGH | 4 | | | | | | | | | |
| 140010 | VAR. MEAT BALLS | 16 | | 350005 | TRIPE STEW | 1 | | | | | | | | | |
| 140180 | GIZZARD | 20 | | | | | | | | | | | | | |
| 100201 | LARDO GRILL. PORK | 20 | | | | | | | | | | | | | |
| 100202 | SOUVLAKI | 15 | | | | | | | | | | | | | |

☐ : FILL IN (INPUT) ORDER QUANTITY

REM.

EP 3 509 029 A1

FIG. 11

EP 3 509 029 A1

CALCULATION SHEET FOR ORDER
QUANTITY OF VARIOUS BEVERAGES

| 1013 |
| ○○○○STORE |

① RESULT OF VARIOUS BEVERAGES/DAY : USE
   RESULT DATA OF FOLLOWING RANGE
② COMPOSITION RATIO : USE DATA OF
   FOLLOWING RANGE

RESULT DATA : 2009/9/1～2009/9/30
COMP. RATIO DATA : 2010/7/1～2010/8/31

【SALES RESULT OF VARIOUS BEVERAGES】

| DATE(PRE. T) | 2009/9/11 | 2009/9/12 | 2009/9/13 | 2009/9/14 | 2009/9/15 | 2009/9/16 | 2009/9/17 | 2009/9/18 | 2009/9/19 |
|---|---|---|---|---|---|---|---|---|---|
| DAY | FRI. | SAT. | SUN. | MON. | TUE. | WED. | THU. | FRI. | SAT. |
| WEATHER | FINE | RAINY | FINE | FINE | CLOUDY | FINE | FINE | CLOUDY | CLOUDY |
| SA. RE. (¥) | | | | | | | | | |

【SALES RESULT OF VARIOUS BEVERAGES / DAY】

| TERM | ITEM | MON. | TUE. | WED. | THU. | FRI. | SAT. | SUN. | HOLIDAY |
|---|---|---|---|---|---|---|---|---|---|
| 1 | FINE | | | | | | | | |
| 2 | CLOUDY | | | | | | | | |
| 3 | RAINY | | | | | | | | |
| 4 | SEVERE | | | | | | | | |
| 5 | TOTAL | | | | | | | | |

| DATE(CUR. T) | 2010/9/10 | 2010/9/11 | 2010/9/12 | 2010/9/13 | | 9/12 RE. QNT. |
|---|---|---|---|---|---|---|
| PRO. SA. AM. | ✳✳✳ | (SAT.) | (SUN.) | (MON.) | ~320 | (ST. HOL. QNT.) |
| WEATH. PRE. | ✳✳✳ | | | | | ⑥ SA. QNT. ✳ 0.75 |

| | | | | | EXP. QNT. | | | | | ⇧(aim) | |
|---|---|---|---|---|---|---|---|---|---|---|---|
| TERM | CODE | ITEM | ODER LOT | 9/10(FRI.) | 9/11(SAT.) | | | 9/12(SUN.) | 9/13(MON.) | 9/12(SUN.) | ⑧ OD. DIC. | 9/12(SUN.) |
| | | | | ① RE. QNT. | ② WA. QNT. | ③ SA. QNT. | ④ RE. QNT. | ⑤ SA. QNT. | ⑥ SA. QNT. | ⑦ OD. QNT. | | ⑨ RE. (EST.) |
| 1 | 800020 | BEER A | | | | | | | | | | |
| 2 | 800021 | BEER B | | | | | | | | | | |
| 3 | 800030 | SEISHU A | | | | | | | | | | |
| 4 | 800031 | SEISHU B | | | | | | | | | | |
| 5 | 800032 | SEISHU C | | | | | | | | | | |
| 6 | 800040 | SHOCHU A | | | | | | | | | | |
| 7 | 800041 | SHOCHU B | | | | | | | | | | |
| 8 | 800042 | SHOCHU C | | | | | | | | | | |
| 9 | 800050 | SHAOXING RICE WINE | | | | | | | | | | |
| 10 | 800110 | OOLONG TEA | | | | | | | | | | |
| 11 | 800120 | JUICE | | | | | | | | | | |
| 12 | 800130 | COLA | | | | | | | | | | |
| 13 | | | | | | | | | | | | |
| 14 | | | | | | | | | | | | |
| 15 | | | | | | | | | | | | |
| 16 | | | | | | | | | | | | |
| 17 | | | | | | | | | | | | |
| 18 | | | | | | | | | | | | |
| 19 | | | | | | | | | | | | |
| 20 | | | | | | | | | | | | |
| 21 | | TOTAL | | | | | | | | | | |

301
311
310
312
330
341  342  343  331  332  355  361  362

FIG. 12

EP 3 509 029 A1

_201_

| CODE | STORE NAME | SHIP. D. (DEAL.) | OD. | | ORDER CONTACT DOCUMENT [E] | | | | | | | CODE | ORDERING BODY | ORDER DL. | |
|---|---|---|---|---|---|---|---|---|---|---|---|---|---|---|---|
| 1021 | ○○○○STORE | 2013/1/12 | | ORDER AS FOLLOWS | DAILY DELIVERED ( SUPPLYED ) ITEM | | | | | | | 100073 | ○○○○ | 1/11 AM 11:00 | |
| CODE | ITEM ABB. | UNIT | QNT. | CODE | ITEM ABB. | UNIT | QNT. | CODE | ITEM ABB. | UNIT | QNT. | CODE | ITEM ABB. | UNIT | QNT. |
| 140010 | CHICK. & G. ONION | 20 | 40 | 600020 | MISO SAUSE | 2 | | 800020 | BEER A | | | | | | |
| 140030 | LIVER | 25 | | 600030 | SOY SAUSE | 1 | | 800021 | BEER B | | | | | | |
| 100080 | KOMETAMA | 20 | | 800010 | UTAMARO 720ml | 12 | | 800030 | SEISHU A | | | | | | |
| 140050 | MEAT BALLS | 40 | | 600110 | G. ONION | 5 | | 800031 | SEISHU B | | | | | | |
| 140060 | GRISTLE | 20 | | 500040 | HT0501 SE. MISO S. | 1 | | 800032 | SEISHU C | | | | | | |
| 140070 | SKIN | 40 | | 650002 | B THIGH | 2 | | 800040 | SHOCHU A | | | | | | |
| 140080 | CHICKEN WINGS | 25 | | 650005 | MEATBALLS | 6 | | 800041 | SHOCHU B | | | | | | |
| 100015 | GRILL. PORK 15cm | 15 | 30 | 650004 | NECK SKIN | 2 | | 800042 | SHOCHU C | | | | | | |
| 100025 | PORK BELLY 15cm | 15 | 15 | 650007 | M THIGH | 2 | | 800050 | SHAOXING R. WINE | | | | | | |
| 100050 | PORK TONGUE | 20 | 20 | 655001 | TEMPLE | 5 | | 800110 | OOLONG TRA | | | | | | |
| 140090 | CHICKEN TAIL | 30 | 30 | 650003 | BREAST | 2 | | 800120 | JUICE | | | | | | |
| 100030 | PRM. GRLL. PORK | 15 | 30 | 500092 | HT0503 SE. MISO S. | 1 | | 800130 | COLA | | | | | | |
| 140150 | THIGH (BUNGO) | 50 | | 500093 | HT0504 MISO S. CI. | 1 | | | | | | | | | |
| 100060 | SPC. HEAD | 20 | | 500010 | HT0803 MISO 3PSET | 1 | | | | | | | | | |
| 140160 | WINGS (BUNGO) | 25 | 25 | 500090 | HT0502 SOY S. 150m | 5 | | | | | | | | | |
| 140130 | THIGH (NICHINAN) | 40 | 40 | 500231 | HT0505 MISO S. TO. | 1 | | | | | | | | | |
| 140020 | THIGH & G. ONION | 20 | | 650001 | LIVER | 2 | | | | | | | | | |
| 140170 | GRIS. MEAT BALLS | 100 | | 600025 | MISO SA. TO. BSN. | 1 | | | | | | | | | |
| 100131 | INNARDS 40 | 50 | | 600023 | MISO SA. CI. BSN. | 1 | | | | | | | | | |
| 140100 | GRILL. SPR. CHICK. | 15 | | 600015 | GARLIC LIQUOR | 1 | | | | | | | | | |
| 100155 | W. PORK BELLY 15cm | 15 | | 600014 | C THIGH | 4 | | | | | | | | | |
| 140010 | VAR. MEAT BALLS | 16 | | 350005 | TRIPE STEW | 1 | | | | | | | | | |
| 140180 | GIZZARD | 20 | | | | | | | | | | | | | |
| 100201 | LARDO GRILL. PORK | 20 | | | | | | | | | | | | | |
| 100202 | SOUVLAKI | 15 | | | | | | | | | | | | | |
| | | | | | | | | | | | | | | | |
| | | | | | | | | | | | | | | | |
| | | | | | | | | | | | | | | | |
| | | | | | | | | | | | | | | | |
| | | | | | | | | | | | | | | | |

☐ : FILL IN (INPUT) ORDER QUANTITY

REM.

## INTERNATIONAL SEARCH REPORT

| | International application No. |
|---|---|
| | PCT/JP2017/031279 |

### A. CLASSIFICATION OF SUBJECT MATTER
Int.Cl. G06Q30/06 (2012. 01)i

According to International Patent Classification (IPC) or to both national classification and IPC

### B. FIELDS SEARCHED

Minimum documentation searched (classification system followed by classification symbols)
Int.Cl. G06Q30/06

| Documentation searched other than minimum documentation to the extent that such documents are included in the fields searched | |
|---|---|
| Japanese Published Examined Utility Model Applications | 1922-1996 |
| Japanese Published Unexamined Utility Model Applications | 1971-2017 |
| Japanese Examined Utility Model Registrations | 1996-2017 |
| Japanese Registered Utility Model Specifications | 1994-2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2014-13532 A (HAMASAKI HOLDING CO., LTD.) 23 January 2014, paragraphs [0002], [0019], [0063]-[0064], [0068]-[0070], [0071]-[0082], fig. 1, 3-4, 6, 12, 14-17 (Family: none) | 1-2, 5-6<br>3-4 |
| Y<br>A | JP 2012-53764 A (TOSHIBA TEC CORPORATION) 15 March 2012, paragraphs [0001], [0012]-[0013], [0016]-[0017], [0025]-[0030], fig. 1, 4-7 (Family: none) | 1-2, 5-6<br>3-4 |

☒   Further documents are listed in the continuation of Box C.     ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 November 2017 (16.11.2017) | 28 November 2017 (28.11.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**EP 3 509 029 A1**

**INTERNATIONAL SEARCH REPORT**

| International application No. |
|---|
| PCT/JP2017/031279 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 6-149833 A (TOKYO DENKI KABUSHIKI KAISHA.) 31 May 1994, paragraphs [0018], [0024]-[0027], fig. 2, 4, 7 (Family: none) | 1-2, 5-6<br>3-4 |
| Y<br>A | JP 6-96366 A (NEC CORP.) 08 April 1994, paragraph [0018], fig. 3 (Family: none) | 2<br>3-4 |
| A | JP 2015-219781 A (TOSHIBA TEC CORPORATION) 07 December 2015, entire text, all drawings & US 2015/0332376 A1 | 3-4 |
| A | JP 2001-84239 A (TOSHIBA CORP.) 30 March 2001, entire text, all drawings (Family: none) | 3-4 |
| A | JP 2009-187151 A (TSC CONSULTING LTD.) 20 August 2009, entire text, all drawings (Family: none) | 3-4 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003067611 A
- JP 2002024350 A

- JP 2001167168 A